# EUROPÄISCHE PATENTSCHRIFT

(11) **EP 2 029 919 B1**
(45) Veröffentlichungstag und Bekanntmachung des Hinweises auf die Patenterteilung: **28.12.2011**
(21) Anmeldenummer: 07764624.8
(22) Anmeldetag: 12.06.2007
(51) Int. Cl.: F16J 15/34

(54) **GLEITRING EINER GLEITRINGDICHTUNGSANORDNUNG**
SLIDING RING OF A SLIDE RING SEALING ARRANGEMENT
BAGUE COULISSANTE D'UNE GARNITURE D'ÉTANCHÉITÉ À BAGUE COULISSANTE

(30) Priorität: 20.06.2006 DE 202006009762 U
(43) Veröffentlichungstag der Anmeldung: 04.03.2009
(73) Patentinhaber: EagleBurgmann Germany GmbH & Co. KG, 82515 Wolfratshausen (DE)
(72) Erfinder: OTSCHIK, Joachim, 63741 Aschaffenburg (DE); SCHICKTANZ, Rudolf, 82538 Geretsried (DE); SCHRÜFER, Andreas, 82515 Wolfratshausen (DE); BERGER, Wolfgang, 83671 Benediktbeuern (DE); KIRCHHOF, Martin, 81477 München (DE); RADULESCU, Peter, verstorben (DE); THELKE, Jörg, 82515 Wolfratshausen (DE); ARMGARDT, Markus, 38104 Braunschweig (DE); HÖFER, Markus, 38162 (DE); SCHÄFER, Lothar, 38527 Meine (DE)
(74) Vertreter: Schaeberle, Steffen
(86) Internationale Anmeldenummer: PCT/EP2007/005184
(87) Internationale Veröffentlichungsnummer: WO 2007/147508

(56) Entgegenhaltungen:
- EP-A1- 0 351 554
- EP-A1- 0 675 303
- DE-A1- 19 922 665
- YU. PLESKOV: "Synthetic diamond in electrochemistry" RUSSIAN CHEMICAL ABSTRACTS, Bd. 68, Nr. 5, 1999, XP002449802
- M.FRYDA, TH. MATTHÉE, S.MULCAHY, A.HAMPEL,L. SCHÄFER, I. TRÖSTER: "Fabrication and application of Diachem electrodes" DIAMOND AND RELETED MATERIALS, Bd. 12, Nr. 10-11, 2003, Seiten 1950-1956, XP004479890 in der Anmeldung erwähnt

## Beschreibung

Die Erfindung betrifft einen Gleitring einer Gleitringdichtungsanordnung. Die Erfindung betrifft insbesondere einen Gleitring mit einem Basiskörper aus einem karbidischen Material, wobei auf einer der Stirnflächen des Basiskörpers eine verschleissfeste Schicht aus einem Diamantmaterial ausgebildet ist, die eine Gleitfläche vorsieht.

Es ist bekannt, Gleitringe und andere bei Betrieb Verschleiss ausgesetzte Bauteile mit lokalen, sehr glatten Diamantbeschichtungen zu versehen EP0675303 A1, EP 0351554 A1, DE 19922665 A, EP 0614999 A), um an den tribologisch beanspruchten Stellen eine erhöhte Verschleissfestigkeit zu erhalten. In der DE 19922665 sind ferner mit weiteren Literaturhinweisen die technologischen Grundlagen zur In-situ-Herstellung ein- oder mehrlagiger Diamantbeschichtungen nach dem sog. Hot Filament CVD Verfahren (chemisches Abscheidungsverfahren mit Glühdraht) beschrieben.

Die Praxis hat gezeigt, dass karbidische Materialien, wie WC oder SiC, die bei Gleitringen aufgrund ihrer besonderen mechanischen Eigenschaften und Temperaturbeständigkeit bei bestimmten Anwendungsgebieten z.B. in der chemischen Industrie, bevorzugt werden, in Gegenwart aggressiver Medien, wie Säuren, Laugen, oder bei elektro-chemischem Angriff dazu neigen, aus noch nicht geklärten Umständen ihren inneren Gefügezusammenhalt zu verlieren bzw. zu korrodieren. Massnahmen, mit denen sich die Korrosion derartiger Gleitringe verhindern liesse, sind trotz hohem Bedarf nach einer Lösung dieses Problems, nicht bekannt geworden. Bekannt sind jedoch bei Gleitringen, Massnahmen zur Ableitung elektrischer Ladungen, die Funkenerosion vorzusehen.

Der Erfindung liegt die Aufgabe zugrunde, einen umfassend einsetzbaren Gleitring der eingangs erwähnten Art mit einem Grundkörper aus karbidischem Material mit wesentlich erhöhter Lebensdauer zu schaffen.

Diese Aufgabe wird erfindungsgemäss durch die Merkmale des Anspruches 1 gelöst.

Die erfindungsgemässe Beschichtung wenigstens der bei Betrieb einem abzudichtenden Medium ausgesetzten Oberflächen der Gleitringe einer Gleitringdichtungsanordnung mit einem, vorzugsweise in situ auf den Oberflächen gewachsenen Diamantmaterial ermöglicht die Nutzung der vorteilhaften Eigenschaften karbidischer Materialien wie WC oder SiC in Gegenwart aggressiver, zu Korrosion führender Medien, indem diese durch die Diamantbeschichtung an einem Kontakt mit dem karbidischen Material gehindert sind. Dadurch lassen sich Gleitringe mit praktisch nur durch Verschleiss an den Gleitflächen begrenzter Lebensdauer zum Einsatz mit nahezu allen abzudichtenden Medien bei einer sehr grossen Spannweite von Drücken und Temperaturen bereitstellen.

Gemäss einer vorteilhaften Weiterbildung der Erfindung kann die Diamantschicht wenigstens an den Bereichen des Basiskörpers, die nicht mit der Gleitfläche übereinstimmen, elektrisch leitend ist. Dies ermöglicht die Ableitung elektrostatischer Aufladungen und verhindert eventuelle Funkenerosion.

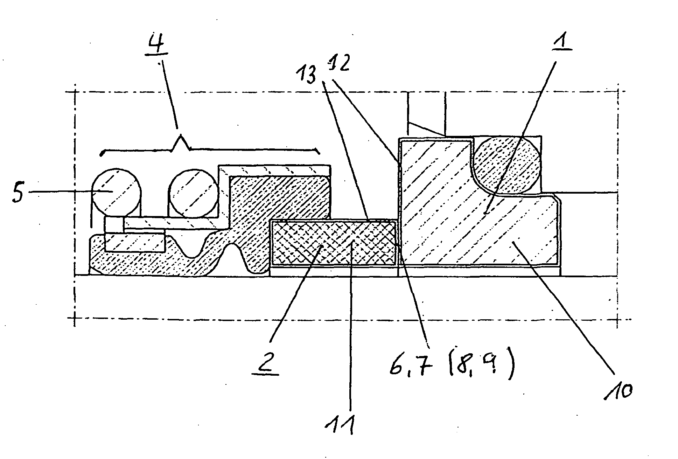

Die Erfindung wird nachfolgend anhand einer Ausführungsform und der Zeichnung näher erläutert. Die Zeichnung zeigt in fragmentarischer, längsgeschnittener Ansicht eine Gleitringdichtungsanordnung mit einem Paar erfindungsgemäss ausgebildeter Gleitringe.

In der Zeichnung dargestellt ist eine Gleitringdichtungsanordnung mit einem Paar zusammenwirkender Gleitringe 1, 2, von denen einer (1) drehfest gegenüber einem stationären Teil, z.B. einem Pumpengehäuse, und der andere (2) zur gemeinsamen Drehung mit einer Welle (nicht gezeigt), z.B. einer Pumpenlaufradwelle, verbunden ist. An einer allgemein mit 4 angedeuteten Einrichtung ist der Gleitring 2, vorzugsweise durch Presssitz, gehalten. Die Einrichtung 4 dient zur drehmomentübertragenden Verbindung des Gleitringes 2 mit der Welle, und umfasst eine Vorspannfeder 5 zur axialen Beaufschlagung des Gleitringes 2 mit einer Vorspannkraft, so dass dieser gegen den stationären Gleitring 1 gedrückt wird, um die einander zugewandten Gleitflächen 6, 7 der Gleitringe 1, 2 in dichtendem Eingriff miteinander zu halten.

Die Gleitflächen 6, 7 der Gleitringe 1, 2, befinden sich an den äusseren glatten Oberflächen von Diamantschichten 8, 9, die in an sich bekannter Weise an den einander zugewandten Stirnflächen der Gleitringe 1, 2 ausgebildet sind.

Jeder Gleitring 1, 2 hat einen ringförmigen Basiskörper 10, 11 mit einer geeigneten Querschnittskonfiguration aus einem karbidischen Material wie Wolframkarbid (WC) oder Siliciumkarbid (SiC). Diese Materialien werden bei Gleitringen wegen ihrer hohen thermischen und mechanischen Belastbarkeit bei Anwendungen mit besonderen Anforderungen bevorzugt.

Erfindungsgemäss weisen nicht nur die einander zugewandten Stirnflächen der Gleitringe 1, 2 eine Diamantbeschichtung auf, sondern ist bei der gezeigten Ausführungsform der Erfindung die gesamte Oberfläche des Basiskörpers 10, 11 jedes Gleit ringes 1, 2 von einer Diamantschicht 12, 13 hermetisch dicht umhüllt, so dass das Material des Basiskörpers 10, 11 vollständig von den Diamantschichten 8, 12 bzw. 9, 13 bedeckt ist. Wenn erwünscht, könnte eine Diamantbeschichtung nur auf solchen Oberflächenbereichen aufgegeben sein, die bei Betrieb dem Angriff eines korrosiven Medium ausgesetzt sind.

Während eine Hauptanforderung an die gleitflächenseitigen Diamantschichten 8, 9 gute tribologische Eigenschaft, insbesondere gute Oberflächengüte und hohe Verschleissfestigkeit bei gleichzeitiger Mediumdichtigkeit ist, steht die Mediumdichtigkeit bei den die restlichen Oberflächenbereiche der Basiskörper 10, 11 abdeckenden Diamantschichten 12, 13 im Vordergrund, während an die Oberflächenbeschaffenheit der Diamantschichten 12, 13 und Güte des Diamantgefüges geringere Anforderungen gestellt werden.

Mediumdichte Diamantschichten mit den gewünschten Spezifikationen können durch ein- oder mehrlagiges In-situ-Wachstum auf den Basiskörpern 10, 11 nach dem CVD-Verfahren, insbesondere Hot-Filament-CVD-Verfahren gebildet werden. Diese Technologie ist dem Fachmann bekannt und bedarf deshalb keiner näheren Erläuterung.

Es wurde festgestellt, dass eine ausreichende Mediumdichtigkeit eine bestimmte Mindestdicke der Diamantschichten 8, 9 bzw. 12, 13 erforderlich macht. Versuche haben gezeigt, dass die Dicke der Diamantschichten 8, 9 bzw. 12, 13 zwischen etwa 0,05 und 15 µm betragen sollte. Die einzelnen Diamantschichten 8, 9 und 12, 13 naben unterschiedliche Dicken . Die zu wählende Dicke der Diamantschichten 8, 9 bzw. 12, 13 wird u.a. von der Art des abzudichtenden Mediums bestimmt. Bei besonders aggressiven Medien wie HF-Säure müssen auch nur vereinzelt auftretende Mikroporen verhindert und sollte daher eine hohe Schichtdicke vorgesehen werden, während bei anderen Medien wie Schwefelsäure, Salzsäure, Natronlauge häufig eine Schichtdicke zwischen 3,0 und 4,0 µm ausreichend ist.

Zur Ableitung eventuell bei Betrieb auftretender elektrischer Aufladungen der Gleitringe 1, 2 kann ferner vorgesehen werden, dass wenigstens die Diamantschichten 12, 13, vorzugsweise auch die gleitflächenseitigen Diamantschichten 8, 9 elektrisch leitend beschaffen sind. Dazu können in das Ausgangsmaterial für das Diamantwachstum elektrisch leitende Verunreinigungen wie Bor eingegeben werden, wie dies aus der Herstellung von Diamantelektroden bekannt ist. Zu weiteren Details kann z.B. verwiesen werden auf M. Fryda, Th. Mathee, et al, "Fabrication and Application of Diacem Etektrodes", Diamond and Related Materials 12, 2003, S. 1950-1956.

Die Erfindung wurde vorausgehend anhand einer Ausführungsform eine Gleitringdichtungsanordnung beschrieben, bei der beide Gleitringe aus karbischem Material bestehen und Diamantbeschichtungen aufweisen. Wenn erwünscht, könnte auch nur einer der zusammenwirkenden Gleitringe in der geschilderten Weise ausgebildet sein, während der andere aus einem nicht-karbidischen Material mit natürlicher Beständigkeit gegenüber den zum Einsatz kommenden Medien bestehen könnte.

## Patentansprüche

1. Gleitring einer Gleitringdichtungsanordnung, mit einem Basiskörper (10,11) aus einem karbidischen Material, wobei auf einer der Stirnflächen des Basiskörpers eine verschleissfeste Schicht (8,9) aus einem Diamantmaterial ausgebildet ist, die eine Gleitfläche (6,7) vorsieht, **dadurch gekennzeichnet, dass** der Basiskörper (10,11) wenigstens an seinen bei Betrieb einem abzudichtenden Medium ausgesetzten Oberflächenbereichen in einer Schicht (8,9,12,13) aus Diamantmaterial mit einer Fluiddichtigkeit schaffende Schichtdicke und/oder Konfiguration hermetisch eingeschlossen ist, wobei eine Eigenschaft der Diamantschicht und/oder das Diamantmaterial an den Bereichen des Basiskörpers, die nicht mit der Gleitfläche (6,7) übereinstimmen, unterschiedlich zur gleitflächenseitigen Diamantschicht (8,9) ist, und wobei die Diamantschicht (8,9) an der Gleitfläche (6, 7) eine unterschiedliche Dicke zur Diamantschicht (12,13) an den beim Betrieb dem abzudichtenden Medium ausgesetzten Oberflächenbereichen aufweist.

2. Gleitring nach Anspruch 1, **dadurch gekennzeichnet, dass** die Diamantschicht (8,9,12,13) wenigstens an den Bereichen des Basiskörpers (10.11), die nicht mit der Gleitfläche (6,7) übereinstimmen, elektrisch leitend ist.

3. Gleitring nach Anspruch 1 oder 2, **dadurch gekennzeichnet, dass** jede Diamantschicht (8,9,12,13) eine Dicke zwischen etwa 0,05 und 15 µm hat, wobei die Schichtdicke umfänglich des Querschnitts des Basiskörpers (10,11) veränderlich ist.

4. Gleitring nach einem der vorhergehenden Ansprüche, **dadurch gekennzeichnet, dass** jede Diamantschicht (8,9,12,13) durch wenigstens zwei aufeinanderfolgende Wachstumsstufen auf dem Basiskörper (10,11) aufgebracht ist.

5. Gleitring nach einem der vorhergehenden Ansprüche, **dadurch gekennzeichnet, dass** die gesamte Oberfläche des Basiskörpers (10,11) von einer Diamantschicht bedeckt ist.

6. Gleitringdichtungsanordnung mit einem Paar zusammenwirkender Gleitringe (1,2) mit Gleitflächen (6,7), die zwischen sich einen Dichtspalt begrenzen, **dadurch gekennzeichnet, dass** wenisgtens einer der Gleitringe (1,2) gemäss den Merkmalen eines oder mehrerer der Ansprüche 1 bis 5 ausgebildet sind.

## Claims

1. A seal ring of a mechanical seal assembly, comprising a base body (10, 11) made of a carbide material, wherein a wear-resistant layer (8, 9) made of a diamond material is formed on one of the front faces of the base body, which layer provides a sliding surface (6, 7), **characterized in that** the base body (10, 11), at least at the surface portions thereof subjected to a sealing medium during operation, is hermetically enclosed in a layer (8, 9, 12, 13) made of a diamond material having a layer thickness and/or a configuration creating a fluid tightness, wherein a property of the diamond layer and/or the diamond material at the portions of the base body not corresponding to the sliding surface (6, 7) is/are different to that of the diamond layer (8, 9) on the side of the sealing surface, and wherein the diamond layer (8, 9) at the sliding surface has a different thickness with respect to the diamond layer (12, 13) at the surface portions being subjected to the sealing medium during operation.

2. The seal ring of claim 1, **characterized in that** the diamond layer (8, 9, 12, 13) is electrically conductive at least at those portions of the base body (10, 11) not corresponding to the sliding surface (6, 7).

3. The seal ring of claim 1 or 2, **characterized in that** each diamond layer (8, 9, 12, 13) has a thickness between approx. 0,05 and 15 µm, wherein the layer thickness is varying about the periphery of the cross-section of the base body (10, 11).

4. The seal ring of one of the preceding claims, **characterized in that** each diamond layer (8, 9, 12, 23) is applied onto the base body (10, 11) by at least two subsequent growth stages.

5. The seal ring of one of the preceding claims, **characterized in that** the complete surface of the base body (10, 11) is covered by a diamond layer.

6. A mechanical seal assembly comprising a pair of cooperating seal rings (1, 2) including sliding surfaces (6, 7) which delimit a sealing gap between them, **characterized in that** at least one of the seal rings (1, 2) is formed according to the features of one or more of claims 1 to 5.

## Revendications

1. Anneau de glissement d'une garniture mécanique d'étanchéité, avec un corps de base (10, 11) constitué d'un matériau carburé, sachant qu'une couche (8, 9) résistante à l'usure, constituée d'un matériau en diamant, est formée sur une des faces frontales du corps de base, couche qui présente une surface de glissement (6, 7), **caractérisé en ce que** le corps de base (10, 11), au moins sur ses régions de surface exposées en utilisation à un milieu à étancher, est hermétiquement enfermé dans une couche (8, 9, 12, 13) constituée d'un matériau en diamant, ayant une épaisseur de couche et/ou une configuration créant une étanchéité aux fluides, sachant qu'une propriété de la couche en diamant et/ou du matériau en diamant, dans les régions du corps de base qui ne correspondent pas à la surface de glissement (6, 7), est différente de la couche en diamant (8, 9) située du côté de la surface de glissement, et sachant que la couche en diamant (8, 9) sur la surface de glissement (6, 7) présente une épaisseur différente de la couche en diamant (12, 13) sur les régions de surface exposées en utilisation au milieu à étancher.

2. Anneau de glissement selon la revendication 1, **caractérisé en ce que** la couche en diamant (8, 9, 12, 13), au moins sur les régions du corps de base (10, 11) qui ne correspondent pas à la surface de glissement (6, 7), est électriquement conductrice.

3. Anneau de glissement selon la revendication 1 ou 2, **caractérisé en ce que** chaque couche en diamant (8, 9, 12, 13) possède une épaisseur comprise entre environ 0,05 et 15 µm, sachant que l'épaisseur de couche est variable sur le pourtour de la section du corps de base (10, 11).

4. Anneau de glissement selon l'une des revendications précédentes, **caractérisé en ce que** chaque couche en diamant (8, 9, 12, 13) est appliquée par au moins deux étapes de croissance successives sur le corps de base (10, 11).

5. Anneau de glissement selon l'une des revendications précédentes, **caractérisé en ce que** la totalité de la surface du corps de base (10, 11) est recouverte par une couche en diamant.

6. Garniture mécanique d'étanchéité avec une paire d'anneaux de glissement (1, 2) qui coopèrent entre eux et sont pourvus de surfaces de glissement (6, 7) qui délimitent entre elles une fente d'étanchéité, **caractérisée en ce qu'**au moins un des anneaux de glissement (1, 2) est configuré selon les caractéristiques d'une ou plusieurs des revendications 1 à 5.
